Europäisches Patentamt

European Patent Office

Office européen des brevets

(19)

(11) Publication number: **0 309 375**
**A2**

# (12) EUROPEAN PATENT APPLICATION

(21) Application number: **88500085.1**

(22) Date of filing: **21.09.88**

(51) Int. Cl.4: **H 02 M 7/538**

(30) Priority: **21.09.87 ES 8702699**

(43) Date of publication of application:
**29.03.89 Bulletin 89/13**

(84) Designated Contracting States:
**DE FR GB IT NL SE**

(71) Applicant: **QUEST ELECTRONICS, S.A.**
**C/ Josep Montserrat i Cuadrada, 3**
**E-08303 Mataro Barcelona (ES)**

(72) Inventor: **Greg Palaske, Mark**
**Avda. Alella, 18**
**E-08328-Alella (Barcelona) (ES)**

**Moneo Lopez,Javier Eugenio**
**Avda. Alella, 18**
**E-08328-Alella (Barcelona) (ES)**

(74) Representative: **Gomez-Acebo y Pombo, José Miguel**
**c/o CLARKE, MODET & Co. Paseo de la Castellana 164**
**E-28046 Madrid (ES)**

(54) **Highly efficient conversion circuit for power supplies.**

(57) The following patent application refers to a conversion circuit with high efficiency for power supplies that change alternating current to direct current and vice versa, adjusting the voltage supplied automatically for the load. These circuits can include schemes for isolating the inputs from the outputs of the circuits by switching capacities, with less losses than conventional schemes and marked by their high effeciency with relation to the parisitic capacity at the input and the output.

The entire circuit is controlled digitally, whether supplying a constant current or a constant voltage.

EP 0 309 375 A2

**Description**

## HIGHLY EFFECIENT CONVERSION CIRCUIT FOR POWER SUPPLIES

The object ot the present patent application is a "Highly Effecient Conversion Circuit for Power Supplies".

After a long and costly research and development effort, motivated by an imperious industrial need, due to the lack of circuits such as the one described here in the world market, the aforementioned circuit has been invented, and demonstrate a number of fundamental advantages over present day circuits for the conversion of electrical energy existing now on the world market.

Those present day circuits are based on electronic configurations that do not permit them to achieve high conversion effeciency if not by a disproportionate increase in the size of the basic components.

This lack of effeciency is manifested in a loss of energy principally in the form of heat, being as well an essential cause of their low effeciency.

At the same time, and due to the configuration of said circuits, the output voltage and consequently the output current suffer a distorsion of their normal waveform, characteristically in the form of ripple, undesirable and harmfull for other circuits, both active and passive, to which the conversion circuit is connected.

The currently presented circuits are based on the DIRECT CONVERSION of supply circuits up until now, the conversion of energy is INDIRECT and GALVANIC. This transformation of energy galvanically puts a limit on the effeciency of their conversion that rarely surpasses 86%. Nevertheless, and due to the direct transformation of energy that characterizes the present circuits, effeciencies above 90% can be achieced, nearing 97% conversion effeciency in some cases.

The present patent application, as already mentioned constitutes a conversion circuit that can convert A.C. to D.C. and vica versa, being able to either increase or decrease the input voltage and automatically adjusting the output voltage to the requirements of the load connected.

As well, these circuits, producing a stabilized and regulated output, can be regulated either in voltage or current according to the application. This characteristic, with few modifications to the basic circuit, permits the application of this technology in high voltage, current regulated power supplies and in low voltage regulated power supplies.

The design of this present circuit facilitates that the regulated output of the circuit will remain regulated even with very wide variation of the input voltage. In current regulated configurations,the output voltage of the circuit is exactly that voltage required by the load to which it is connected. According to the multiplication that can be achieved, however the circuit will provide whatever vaoltage is required by the load up to this maximum. Therefore a power supply that generates an output voltage of 3000 volts can also be applied to loads that require 1000 volts, 500 volts, 100 volts, or even 1 volt without any modification whatsoever to the circuit. The circuit will continue to supply the preset or desired output current no matter what the output voltage is. TO DATE, WE KNOW OF NO TYPE OF CONVENTIONAL POWER SUPPLY THAT CAN WORK IN THIS WAY.

The present circuit is also designed to accept a great variation of its input voltage without this factor influencing the regulated value of the output, whether this be in voltage or in current.

The range of input voltages, according to the application of this circuit, can be very wide. For example, the described circuit can accept input voltages from 80 V.A.C. to 280 V.A.C. without this variation greatly influencing fthe regulation of the output voltage or current, maintaining this regulation very precisely, (less than 1% variation). This precision of regulation coupled wih the wide range of input voltage is impossible with present day switch mode technology power supplies.

These circuits can incorporate switching isolation schemes, differentiating these from the galvanic isolation present in the great majority of power supplies. These switching isolation schemes have less losses than galvanic isolation, and the parasitic capacitance between input and output is superior in the majority of cases. The ohmic resistance may be similar, less or greater according to the application, however the most outstanding feature of this type of electrical isolation is its effeciency with relation to its parasitic capacitance between input and output.

The entire circuit is controlled, in terms of output voltage or current, digitally. This facilitates the control and variation of the functioning range of this type of power supply. It is equipped with an external connection so as to be able to control it externally by computer, if that is required.

Due to the numerous advantages that this circuit offers compared to other present day power supply circuits, its area of application is very wide.

It can be pointed out that this circuit offers advantages over current technology in the fields of power supplies for lasers, power supplies for computers, telecomunications, aeronautical and astronautical applications and electrical convertors of solar energy, only to name a few of the many applications that this type of power supply circuit has.

With this invention the functioning of many types of existing aparatus will be improved, and it will permit the realization of other applications previously unfeasable.

For a more detailed description of the invention, please refer to the accompanying schematics, which for sake of example and explanation, but without implying any limitations with reference to applications using the basic circuit, are represented here.

The circuit shown in schematic number 1 is the control of the switching timing. this is supplied through output points labelled "A" and "B", these being components with equal magnitude in terms of switching time and frequency, but negated digitally between themselves.

The duty cycle of the switching time is ruled by the input point denominated "G" and "C" with their voltage levels being compared by the integrated circuit denominated IC 1. The comonents marked with the following references: R-6, R-3, R-5, R4, C6, C3, D21, TR1 are a delay sistem to regulate the start up and shut down sequence.

The components marked "R1-C8" fix the switching frequency of the I.C. "IC1".

The output point "E" corresponds to a 12 volt positive D.C. supply, with its general ground being in all the schematics, the point marked in schematic number 1 as "D".

DESCRIPTION OF COMPONENTS IN SCHEMATIC NUMBER 1

IC1-UC 3525 or similar
TR1-NPN transistors
DZ1-D22- zener diodes
CI-C6- electrolytic capacitors
C2-C3-C4-C5-C7-C8-C9-C10-C11- capacitors
R1-R2-R3-R4-R5-R6- resistors
D1-D2-D3-D4- diodes

The circuit shown in schematic number 2 is the supply for the circuit shown in schematic number 5. This circuit includes a scheme for electronical isolation, which if desired, could be substituted by the circuit shown in schematic number 4 which is similar but does not include isolation between input and output. In the case of using the circuit in schematic number 4, the supplies V3, V4, V5, and V6 are not used.

DESCRIPTION OF COMPONENTS IN SCHEMATIC 2

DI to D26 DIODES
TRI-TR2-TR- 50-60 HzAC TRANSFORMERS
C1- ELECTROLYTIC CAPACITOR
DZ1 TO DZ6- ZENER DIODES
C2 TO C7 - CAPACITORS

The circuit shown in schematic number 3 is the general output of the groups of circuits or sub-assemblies. The components marked "C1,C2, and D1,D2,D3,D4, are the components that configure the basic cell for multiplying the input voltage, permiting the addition of however many cells are necessary to produce the desired voltage. The capacity of the capacitors of the basic cell will change depending on the current required by the load.

As well, the characteristics of the diodes in the basic cell will vary according to the current and voltage required for each application.

The components marked TR1 and TR2 in schematic number 3 are two transformers with ferrous cores. The characteristics of these components will vary according to the current and voltage supplied by the voltage multiplication cells. The optocouples marked in schematic No. 3 and the I.C. marked I.C.1 as well as the components "R1,R2,R3,R4,R5,C7,D21" converts the current that circulates through R1 to a voltage on the point marked "G", this being proporcional to the intensity through R1. The points marked F-G-D in the schematic number 3 are sconnected to their corresponding letters in schematic number 1.

DESCRIPTION OF COMPONENTS IN SCHEMATIC 3

IC1- OPTOCOUPLER 6N139 OR SIMILAR
TR1-TR2- FERRITE CORE TRANSFORMERS
R1 TO R5- RESISTORS
DZ1- ZENER DIODES
D1 TO D8- DIODES
C1 TO C7- CAPACITORS

The circuit shown in schematic number 4 illustrates the power amplifier for the entire circuit, ruled by the points marked A and B that come from the control circuit shown in schematic number 1.

The integrated circuits marked IC3-IC4-IC5-IC6 are signal amplifiers used to attack the gates of the MOSFET transistors.

The outputs marked I and J are connected to the inputs I and J respectivly in schematic number 3. The point marked H is the positive supply coming from the same point H in schematic number 2.

DESCRIPTION OF COMPONENTS IN SCHEMATIC 4

M1-M2-M3-M4- POWER MOSSFET TRANSISTORS
IC1-IC2- OPTOCOUPLERS 6N139 OR SIMILAR
IC5-IC6- INVERTED AMPLIFIERS FOR MOSSFETS
IC3-IC4- NON INVERTED AMPLIFIERS FOR MOSSFETS
R1 TO R6- RESISTORS
C5-C6-C9-C10- ELECTROLYTIC CAPACITORS
C1-C2-C3-C4-C7-C8- CAPACITORS
DI TO D8- DIODES

The circuit shown in schematic number 5 shows, as does schematic number 4, the power amplifier for the entire circuit. the differance between the two circuits is that the circuit shown in schematic number 5 incorporates a scheme to isolate the input from the output by electronic switching, this being the fundamental mission of this circuit.

If isolation between the input and the output is not necessary then the circuit shown in schematic 4 is sufficient.

The integrated circuits marked in the schematic as IC7-IC8-IC13-IC10-IC11-IC12-IC14 are signal amplifiers used to activate the gates of the MOSFET transistors.

The outputs marked "I" and "J" are connected to the inputs marked "I" and "J" in the circuit of schematic number 3. The point marked "H" is a positive supply that comes from the same point on schematic number 3.

DESCRIPTION OF COMPONENTS IN SCHEMATIC 5

M1 TO M8- MOSSFET POWER TRANSISTORS
IC1 TO IC6- OPTOCOUPLERS 6N139 OR SIMILAR
IC7 TO IC12- INVERTED AMPLIFIERS FOR MOSSFETS
IC13 AND IC14 NON-INVERTED AMPLIFIERS FOR MOSSFETS
R1 TO R18 TO RESISTORS

C9-C10-C11-C12-C13-C14-C17-C18- ELECTROLYTIC CAPACITORS
C1-C2-C3-C4-C5-C6-C7-C8-C15-C19- CAPACITORS

The circuit shown in schematic number 6 shows a circuit to control the voltage level at the point marked "C". This control is done digitally and is compared by the circuit in schematic number 1. The point marked "C" in schematic 6 is connected to the same point in schematic number 1 the same being true for points "D" and "E" being connected to their respective points in schematic number 1.

The I.C. marked IC3 does the function of digital to analogue converter, in the same way, the I.C's marked IC1-IC2 are 2 digital counters. The information in these counters is memorized by themselves due to the fact that their power source is maintained constant through a battery.

These digital counters are controlled through a connector by an external signal.

DESCRIPTION OF COMPONENTS IS SCHEMATIC NUMBER 6

IC3- DIGITAL TO ANALOGUE CONVERTER, 8 BIT
IC1-IC2- DIGITAL COUNTERS, 4 BIT
R1 TO R11- RESISTORS
C1-C2-C3- CAPACITORS
DZ1-DZ2- ZENER DIODES
BAT 1- BATTERY

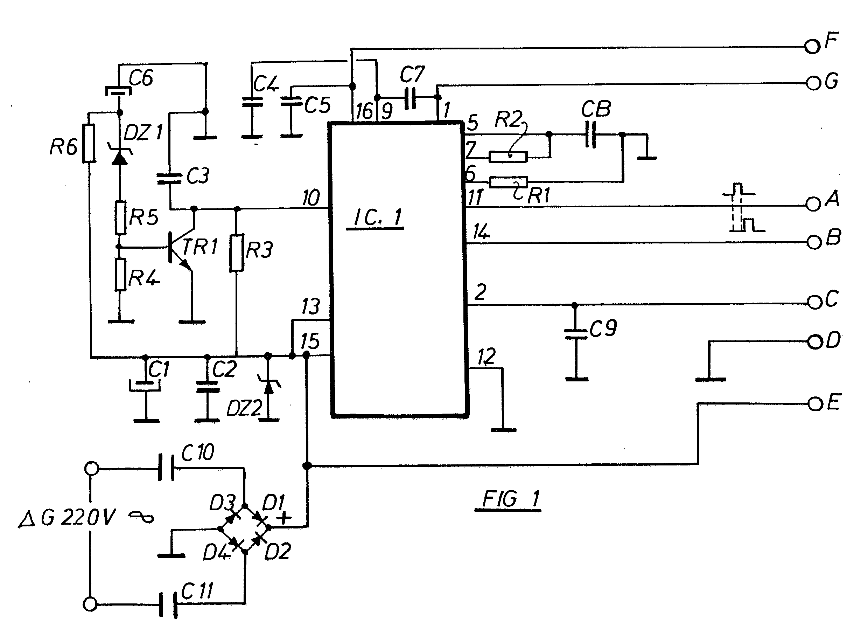

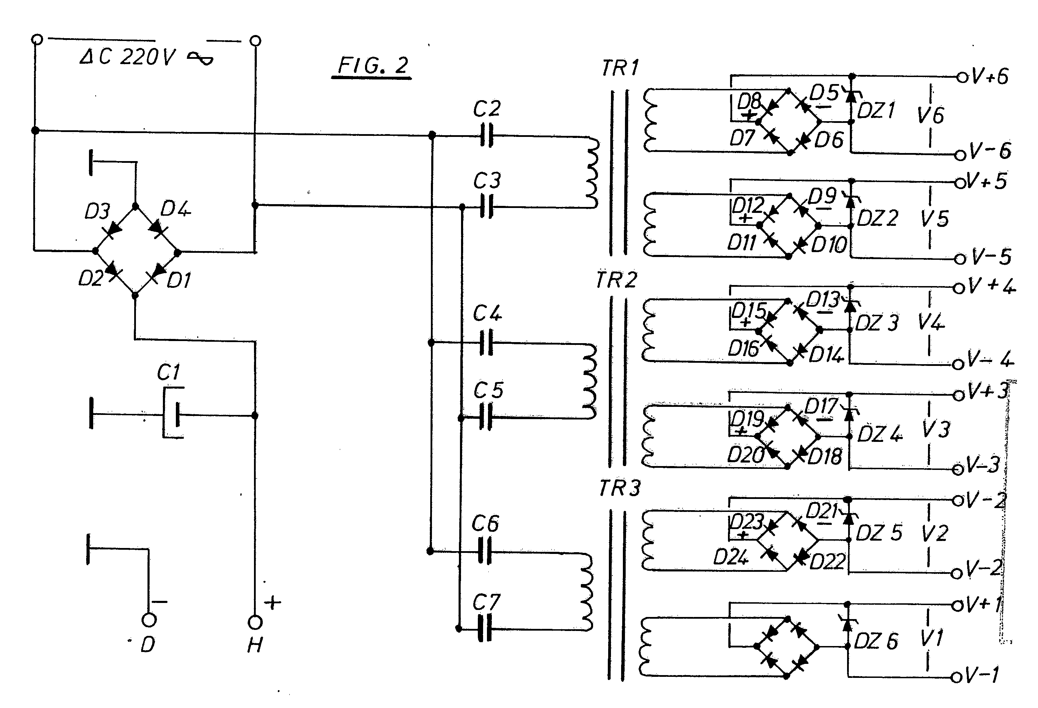

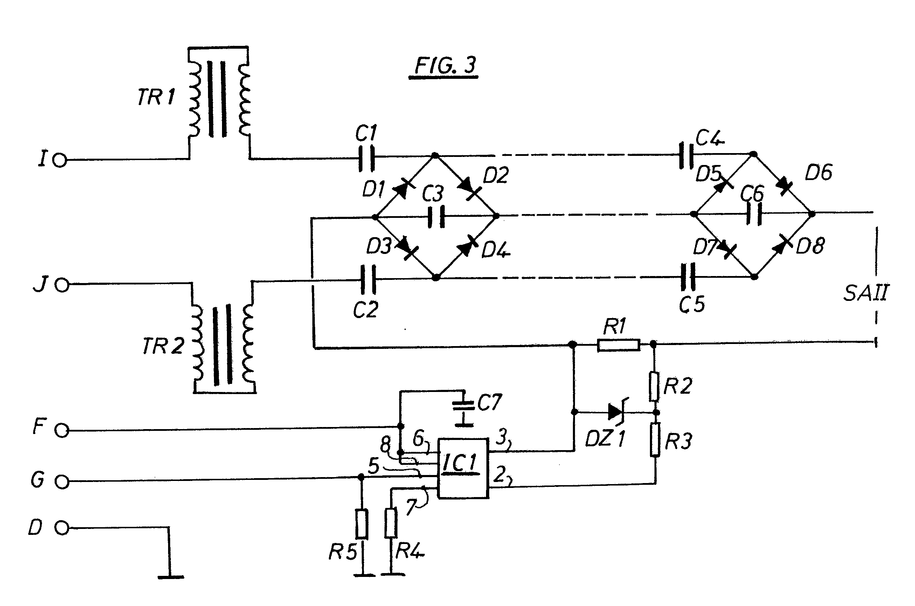

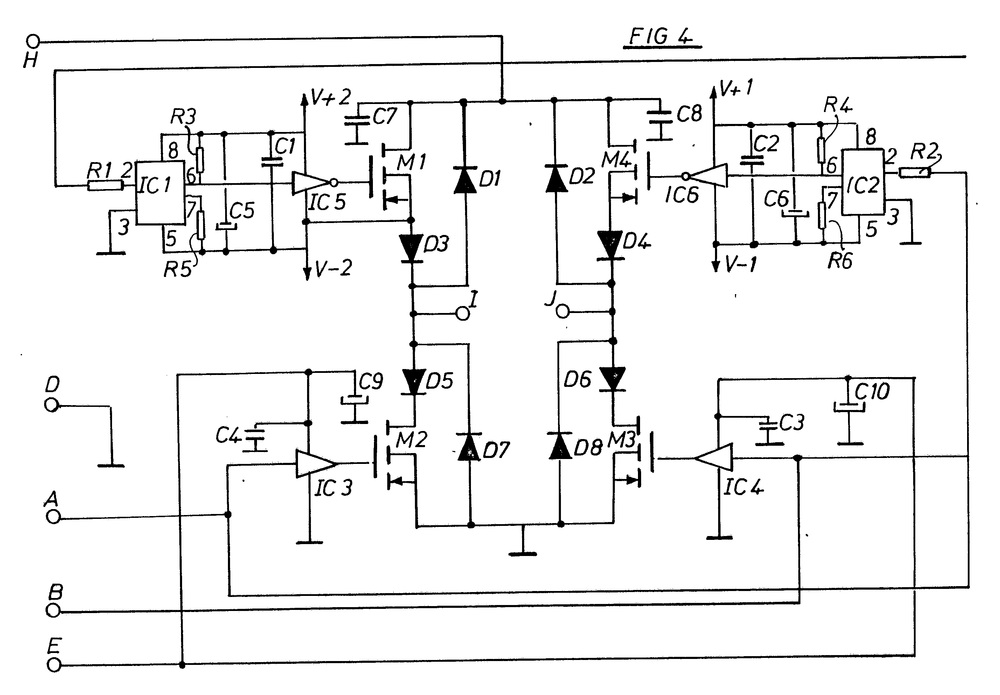

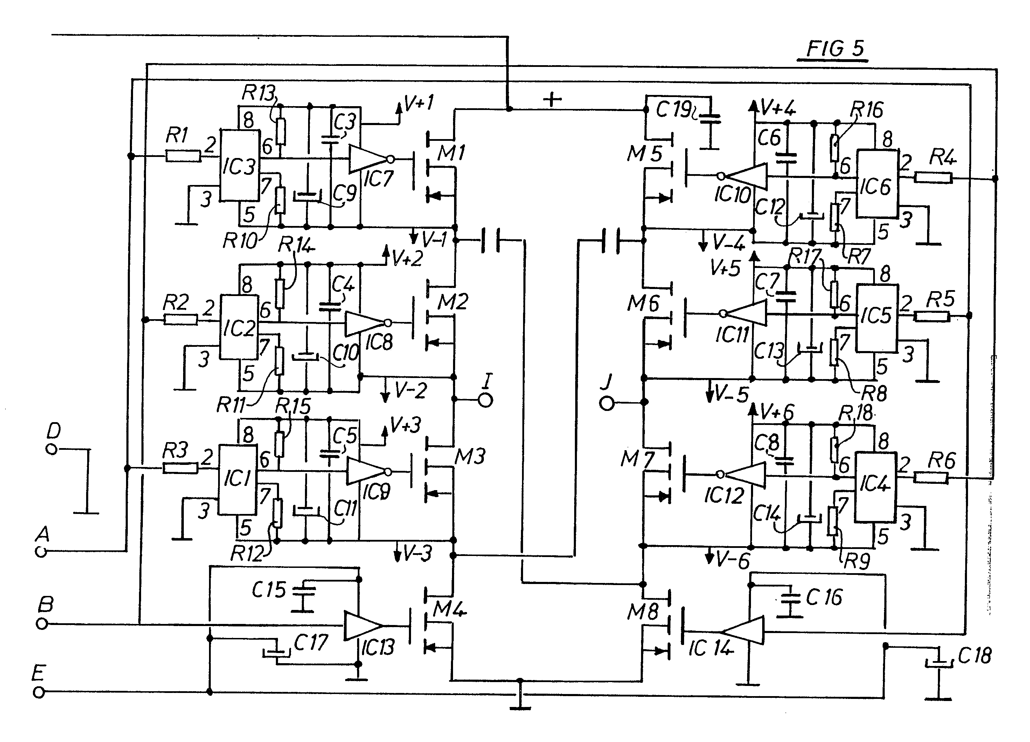

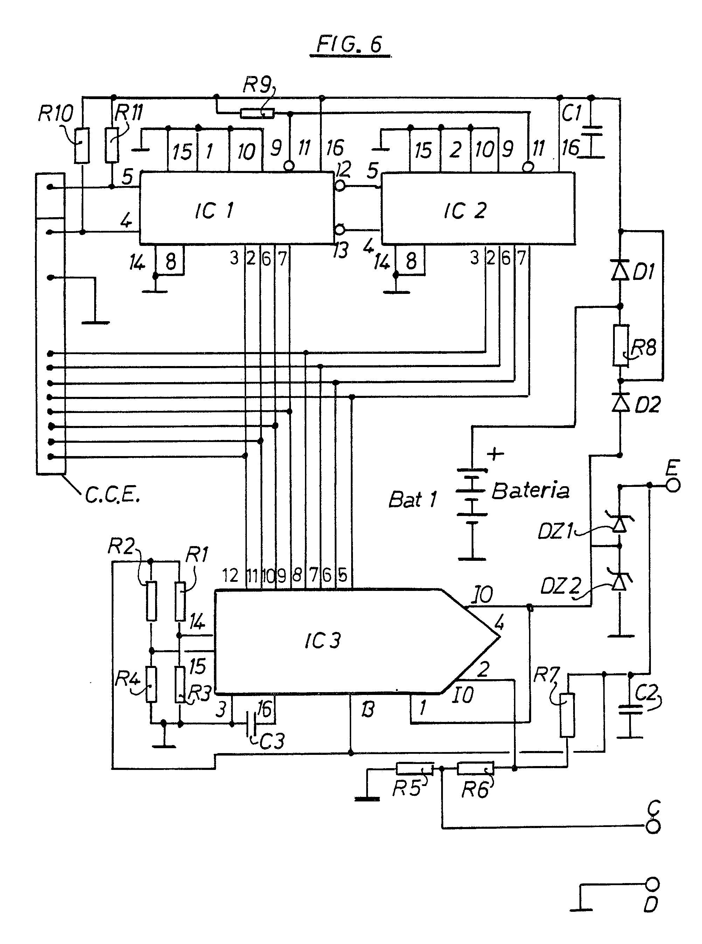

**Claims**

1). That this high effeciency conversion circuit for power supplies is characterized by its electrical isolation between input and output, this being superior to a galvanic isolation in capacity, due to the use of switching isolation circuits. The other circuits desscribed herein can work without electronic switching isolation without affecting their characteristics and functions.

2) That this high effeciency coversion circuit for power supplies is characterized by the wide range of voltage or current generated by a single element. The variacion in output can be from 0 volts to Kilovolts according to the application of these circuits. Every circuit is capable of adjusting automatically the voltage or current needed by the load or application within its parameters, being only the number of voltage multiplication cells used that delimit the maximum output in voltage or in current.

3) That this high effeciency conversion circuit for power supplies is characterized by the wide range of input voltage that it can accept and function normally. These circuits can be supplied (according to their application) with whatsoever input voltage between 5 volts and 380 volts, this voltage being either A.C. or D.C.

4) That this high effeciency conversion circuit for power supplies is characterized by its great stability in voltage or current on the output. The stability of the output is automatically regulated and far superior to the present day systems for regulating output voltage or current in use. This system permits that the output does not vary even though there are great fluctuations of input voltage ( for example 80 VAC - 260 VAC).

5) That this high effeciency conversion circuit for power supplies is characterized by its highly effecient conversion of electrical energy. This conversion effiency can be greater than 95% and in all cases greater than conversion of present day power supply technologies.

6) that this high effeciency conversion circuit for power supplies is characterized by the fact that its output control circuits are controlled by digital reference circuit. This digital reference can come from a memory circuit intergrated into the conversion circuitry or from a digital circuit. The programming of this digital reference can be from an external microcomputor or from a microcomputor integrated into the circuitry.

7) That this high effeciency conversion circuit for power supplies is characterized by the fact that it can work as either a multiplier or a divider of the input voltage, according to what the application requires, without having to change the configuracion of the circuit.

8) That this high effeciency conversion circuit for power supplies is characterized by the fact that its output, according to the application, can be regulated either in voltage or in current, through an optically coupled feed back circuit used to augment or dimnish the output voltage or current.

9) That this high effeciency circuit for power supplies is characterized by the fact that the multiplication circuits ( for voltage or for current ) may be composed of a single multiplication cell or a group of cells, electrically connected between themselves, permitting the insertion of switching circuits between these cells if that is desired.

10) That this high effeciency conversion circuit for power supplies is characterized by the configuration in schematic number 3 marked TR1 and TR2 and the basic cell composed of C1,C2,C3, and D1,D2,D3, and D4 being these elements that form the basis of a new and innovative electronic circuit, making possible the principle characteristics of the circuits mentioned in this patent application.

FIG 1

FIG. 2

AC 220V ∿

EP 0 309 375 A2

FIG. 3

EP 0 309 375 A2

FIG 4

EP 0 309 375 A2

FIG 5

## FIG. 6